# EUROPEAN PATENT SPECIFICATION

(11) **EP 2 819 500 B1**
(45) Date of publication and mention of the grant of the patent: **25.05.2016**
(21) Application number: 13755599.1
(22) Date of filing: 28.02.2013
(51) Int. Cl.: A01C 7/08, A01C 7/04, G01F 25/00

(54) **METHOD FOR CALIBRATING A DEVICE FOR FEEDING A GRANULAR OR POWDER MATERIAL AND SUCH DEVICE**
VERFAHREN ZUR KALIBRIERUNG EINES VORRICHTUNG ZUM ZUFÜHREN EINES KÖRNIGEN ODER PULVERFÖRMIGEN MATERIALS UND SOLCHE VORRICHTUNG
PROCÉDÉ D'ÉTALONNAGE D'UN DISPOSITIF D'ALIMENTATION EN MATÉRIAU GRANULAIRE OU PULVÉRULENT, ET DISPOSITIF

(30) Priority: 01.03.2012 SE 1250197
(43) Date of publication of application: 07.01.2015
(73) Proprietor: Väderstad Holding AB, 590 21 Väderstad (SE)
(72) Inventor: OLANDERS, Martin, S-582 45 Linköping (SE); WISTRAND, Ulf, S-640 24 Sköldinge (SE); FRANSSON, Jörgen, S-590 21 Väderstad (SE)
(74) Representative: Awapatent AB
(86) International application number: PCT/SE2013/050182
(87) International publication number: WO 2013/130003

(56) References cited:
- EP-A1- 2 417 846
- EP-A1- 2 420 121
- WO-A1-2005/018302
- US-A- 4 493 273
- US-B1- 6 230 636
- US-B1- 6 584 920

## Description

### Technical field

The present document relates to a method for calibrating a device for dispensing granular or powdery material, and more specifically to a method for calibrating an agricultural implement, such as a seed drill, a fertilizer spreader or a pesticide spreader.

The document also relates to a device for dispensing granular or powdery material, which device can be calibrated according to the above method.

The document also relates to an agricultural implement which comprises such a device and which can be calibrated according to such a method.

### Background

It is known to use in a seed drill, for example, an air flow to transport granular or powdery material, such as seed, fertilizer or pesticide, from a container via ducts to a plurality of dispensing nozzles. A feed unit can be used to ensure that the correct quantity of material is fed to the air flow.

One example of such an arrangement is shown in Fig. 1, and another example in WO0176992A1.

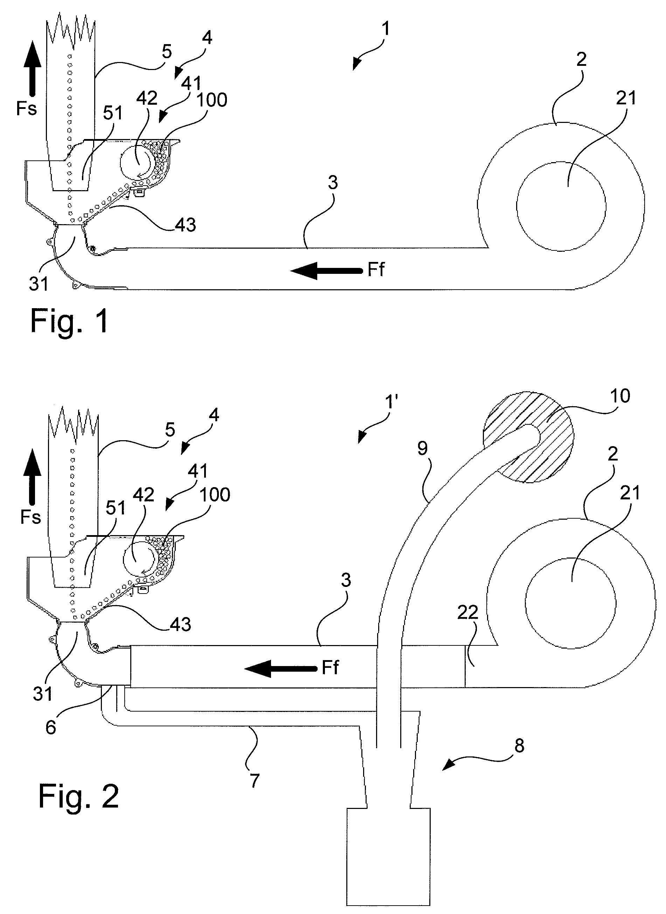

In Fig. 1 is shown a blower 2, which can be a centrifugal blower, such as a radial blower, a duct 3, which conducts air from the blower 2 to a seed feeder 4, which has a container 41 holding a quantity of seed 100, as well as a seed dispenser 42 and a ramp surface 43 along which seed fed by the seed feeder 42, under the influence of gravity, falls down towards an opening 31 through which streams air from the blower 2. As a result of the ejector effect of the air at the opening 31, the seed is drawn along and guided through one or more seed ducts 5 to, for example, the furrow openers of the implement US4493273A also shows a method for calibrating the feed rate of a device for air-flow borne dispensing of granular or powdery material according to the preamble of claim 1. The document further shows a device for air-flow borne dispensing of granular or powdery material according to the preamble of claim 7.

It is desirable to be able to calibrate the feed unit in order to be able to ensure that the correct quantity of material is dispensed per unit of area. This is the case, for example, in sowing, in which it is usually wished to ensure a certain quantity of seed per unit of area of, for example, a field. Such a calibration method is often referred to as a "torsion test".

One way of calibrating a feed unit of a seed drill is to connect a collector, generally in the form of a sack or other container, to a calibration opening of the seed drill, and to activate the feed unit for a predetermined period of time, hereinafter referred to as the "calibration period", in order to conduct a quantity of material, under the influence of gravity, from the feed unit to the collector. After this, the dispensed material is weighed, whereupon the feed unit is adjusted to ensure that the correct quantity of material is dispensed. During the calibration, a value corresponding, for example, to the rotation of the feed unit which took place during the calibration period is registered, hence the term "torsion test".

Typically, values corresponding to the weight and the number of rotations (i.e. the calibration period) are next inputted into the control unit of the seed drill. The inputting can be realized wholly or partially manually.

It is also known to make the control unit of the seed drill adjust the dispensing rate, on the basis of the above values, so as to compensate for the speed of the seed drill over the ground during ongoing sowing.

One difficulty with calibration according to that which has been described above is that the calibration opening, as a consequence of the configuration of the drill, is often placed in a poorly accessible position, typically somewhere directly below the seed box of the drill, which makes calibration an arduous and possibly uncomfortable task for the user.

It is also known to carry out calibration under the influence of a feed air flow, so that the grain which is fed is transported by the feed air flow to a sack, which can be air-permeable and can hence act as a separator.

When the calibration takes place under the influence of an air flow, dust and any chemicals, such as pickling chemicals, with which the seed has been treated are released into the air, which is not very desirable from a work environment perspective. This can be particularly advantageous when the calibration container has the form of an air-permeable sack, and is thus also used as a filter, which means that the air flow goes out through the walls of the calibration container to the region in which the user is normally found during the calibration.

It would therefore be desirable to provide an improved calibration method and, in this regard, an improved device.

### Summary

One object is to provide an improved method for calibrating a device for dispensing granular or powdery material, and a thus improved calibratable device. Special requirements include improvement of the work environment in the vicinity of the device and improved and/or extended functioning of the device.

The invention is defined by the appended independent patent claims. Embodiments derive from the dependent patent claims, from the following description and from the appended drawings.

According to a first aspect, a method for calibrating the feed rate of a device for air flow-borne dispensing of granular or powdery material, such as grain, fertilizer or pesticide, is provided. The method comprises producing a calibration air flow, feeding a quantity of the granular material with the aid of the calibration air flow for a calibration period to a separator and, in the separator, substantially separating the granular material from the calibration air flow. The method further comprises producing the calibration air flow with the aid of underpressure applied to a low-pressure side of the separator.

The granular material can be, for example, grain or other seed, fertilizer or pesticide, or a combination thereof.

The term "calibration period" can be, for example, a predetermined period of time, or a predetermined number of cycles of, for example, a feed device.

As a result of such a method, it is not necessary to rely on gravity to get the fed seed to the calibration container, thereby improving the prospect of a more ergonomic positioning of the calibration container.

An outgoing air flow from the separator can be substantially recycled to a feed air flow. By "substantially recycle" is meant recycling of the air flow with the exception of leakage flows.

Recycling of the air flow from the separator reduces the quantity of particles and substances which are otherwise at risk of being spread to the close environment of the device round about the air outlet of the separator. The outgoing air flow from the separator can be supplied to a low-pressure side of a drive unit which produces the feed air flow. A substantially closed system can thus be achieved.

The feed air flow can be drawn for the most part, preferably substantially only, from the calibration air flow.

The calibration air flow can be produced by a first drive unit, which can be separate from a second drive unit which is arranged to produce a feed air flow.

The granular material can be separated from the calibration air flow with the aid of a cyclone separator.

Incoming air flow to the low-pressure side of the drive unit can be drawn for the most part, and preferably substantially only, from the low-pressure side of the separator.

According to a second aspect, a device for air flow-borne dispensing of granular or powdery material, such as grain, fertilizer or pesticide, is provided. The device comprises a drive unit for producing a calibration air flow, a distributor unit for feeding granular or powdery material to the calibration air flow, and a separator for separating the granular material from the calibration air flow. The device further has an underpressure duct, which connects a low-pressure side of the separator to a low-pressure side of the drive unit.

The drive unit can be separate from a feed drive unit, which is arranged to produce a feed air flow.

The device can comprise an overpressure connection between the overpressure side of the drive unit and the distributor unit, wherein the drive unit is arranged to produce a feed air flow.

The underpressure duct can be detachable relative to the drive unit, so that the drive unit can be supplied substantially only with ambient air. The device can thus be driven, according to choice, with recirculated air or ambient air.

A calibration duct can be arranged for feeding of the granular material between the distributor unit and the separator.

The calibration feed duct can be connected to the distributor unit via a valve. The valve enables selective connection of the calibration duct.

The calibration duct can be detachable relative to the distributor unit, so that an underpressure present in the separator is made available for intake of material to the separator. A simple vacuum cleaner is thus produced, which can be used to clean, for example, the distributor unit.

The realization of such a duct enables the separator to be placed at a distance from the feed device which feeds the material to the feed air flow. The positioning of the separator can thus become more easily accessible for the user.

The separator can comprise a cyclone separator.

The separator can be substantially integrated with the drive unit.

According to a third aspect, an agricultural implement, for spreading granular or powdery material, such as grain, fertilizer or pesticide, is provided, comprising at least one device according to that which has been described above.

The agricultural implement, viewed from above, can have a periphery, and a collector connected to the separator can be arranged less than 1 metre from the said periphery, preferably less than 0.75 m, less than 0.5 m or less than 0.25 m.

### Brief description of the drawings

Fig. 1 is a schematic diagram of a dispensing system according to the prior art during a dispensing operation.
Fig. 2 is a schematic diagram of a new dispensing system 1' during a dispensing operation.
Fig. 3 is a schematic diagram showing the dispensing system 1' in Fig. 2 during a calibration operation.
Fig. 4 is a schematic diagram of a variant of a dispensing system 1".
Fig. 5 is a schematic diagram of a further variant of a new dispensing system 1"'.
Figs. 6a-6c are schematic diagrams of an integrated blower and separator 2' for the dispensing system 1"' according to Fig. 5.
Fig. 7 shows a seed drill 200 pulled by a tractor 300.

### Description of embodiments

Below an example will be described, based on a seed drill. It will be appreciated, however, that other types of drills, such as fertilizer or pesticide spreaders, can be calibrated in the same way.

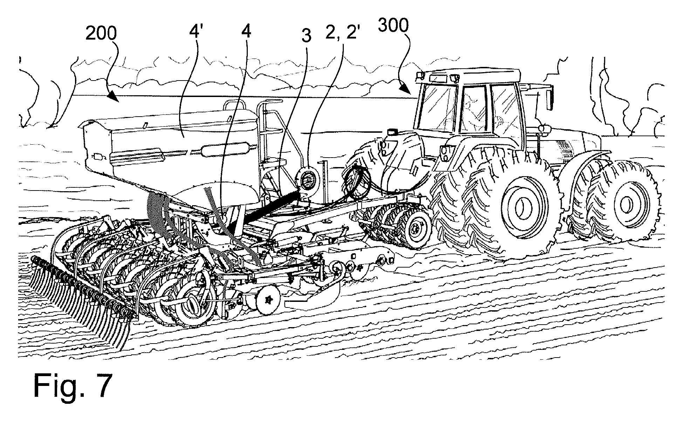

Fig. 1 shows a dispensing system 1 according to the prior art. A blower 2, here in the form of a centrifugal blower, is arranged to produce an air flow Ff via an air duct 3 to a seed feeder 4. The seed feeder can be arranged below, or can constitute a lower part of, a seed box 4' (Fig. 7), so that the seed feeder, with the aid of gravity, is filled with seed from the seed box.

The seed feeder comprises a container 41, which is arranged to accommodate a quantity of granular or powdery material, here grain 100 or other seed, and a seed feeder 42, which is rotatably arranged in the container 41 in order to control the feeding of the seed from the container 41 to the air flow Ff.

Seed which has been fed by the seed feeder is guided to the air flow Ff, for the formation of a seed-mixed air flow Fs, which is conducted from the seed feeder 4 in an outlet duct 5. The seed can be guided to the air flow Ff at least partially under the influence of gravity. In the illustrated pictures, seed which has been fed by the seed feeder 42 is allowed to roll or slide along an inclined surface 43 and into a substantially vertical air flow.

Alternatively, the seed can be allowed to fall down towards a substantially horizontal air flow, such as is shown in WO0176992A1. The mouths 31 of the air duct 3 towards the seed feeder 4 can be tapered, with the aim of achieving higher air flow velocity, and thus a stronger Venturi effect, which helps to suck the seed into the air flow Ff.

Fig. 2 shows an embodiment of the new dispensing system 1'. Those parts which have the same function as in Fig. 1 retain the same reference symbols and will not be described in greater detail. A separator duct 7 connects the air duct 3 to a separator 8 via a valve 6.

The separator duct 7 can have a length amounting to at least around 10%, preferably around 25%, or around 50% of a minimum transport width of the drill. The separator duct 7 can thus extend from, for example, a centre point of the drill, viewed in its transverse direction, and outwards towards an edge portion of the drill, which makes it easier to connect the separator 8 to the seed feeder 4.

The valve 6 can be situated upstream of the seed feeder 4 at such a distance from the seed feeder 4 that, when the valve 6 is open, seed from the seed feeder 42 is fed via the air duct 3 to the separator duct 7. The seed is hence hereupon fed in the direction opposite to the normal direction for the feed flow in the air duct 3.

In the shown example, a substantially horizontal air duct 3 connects to the lower portion of the seed feeder 4 via a duct section bent upwards by around 90 degrees. When the valve 6 is opened, and possibly also an outlet from the seed feeder 4 is closed, the seed will fall downwards and through the bent duct section, and drawn along in the air flow travelling via the valve 6 and the separator duct 7 to the separator 8. The valve is thus situated substantially at the transition between the bent duct section and the air duct 3.

The separator 8 can be a cyclone separator. It is also possible, however, to use other types of separator, such as separators which use filters and/or mesh to separate material from an air flow. An underpressure is applied to the low-pressure side of the separator 8. The underpressure can be generated by the same blower 2 as generates the air flow Ff. This can be achieved by the connection of an underpressure duct 9 from the low-pressure side of the separator to the air inlet 21 of the blower 2, which is also its low-pressure side.

A plate 10 or other closure can possibly be fitted in order to ensure that all, or substantially all, air which is drawn in through the air inlet 21 of the blower 2 passes through the underpressure duct 9. If the air inlet 21 of the blower 2 has openings in several directions, for example opposite to each other, closures can be fitted on both the openings.

It is possible to fit one or more further separators (cyclone and/or filter) between the separator 8 and the blower 2, for example in order to reduce the quantity of dust and other dirt which is otherwise at risk of being supplied to the low-pressure side of the blower 2.

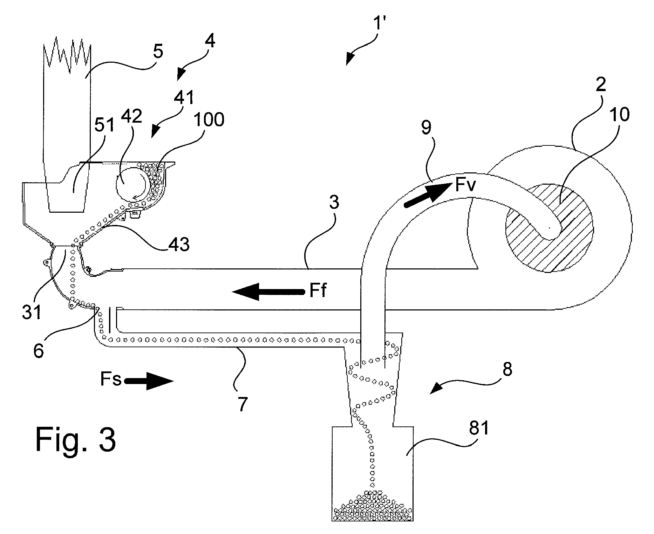

Fig. 3 shows how the device according to Fig. 2 functions with respect to calibration. The underpressure duct 9 from the separator 8 is connected up to the air inlet 21 of the blower 2, at the same time as the air inlet 21 is blocked in order to substantially only draw in air via the underpressure duct 9. The blower 2 is operated in order to produce the air flow Ff in the air duct 3. At the same time, the seed feeder 4 is operated in order to feed seed down to the duct 3.

The air flow Fs is drawn through the separator duct 7 to the separator 8, where the seed is separated and collected in a collector 81. Outgoing air flow from the separator 8 is drawn by the underpressure duct 9 to the air inlet 21 of the blower. The possibly dirty air which emanates from the separator 8 will thus be recycled to the air duct 3 instead of being evacuated to the region outside the system. This reduces the quantity of particles in the ambient air and thus improves the work environment for the operator.

It will be appreciated that, since the purpose of the valve is to control the presence of a calibration flow Fs, the valve 6 can be placed anywhere between the high-pressure side of the separator duct 7 and the low-pressure side of the underpressure duct 9.

The dispensing system 1' is operated for a calibration period which can be, for example, an arbitrary or predetermined time period, or a number of revolutions (pulses, angle of rotation, etc.) of the feeder 42. The quantity of granular or powdery material dispensed during the calibration period can then be weighed (or possibly volumetrically determined), its weight, and possibly also its calibration period or equivalent, being inputted into the control unit of the system (not shown). In this way, the control unit receives data on the basis of which the dispensing system 1' can be calibrated and controlled.

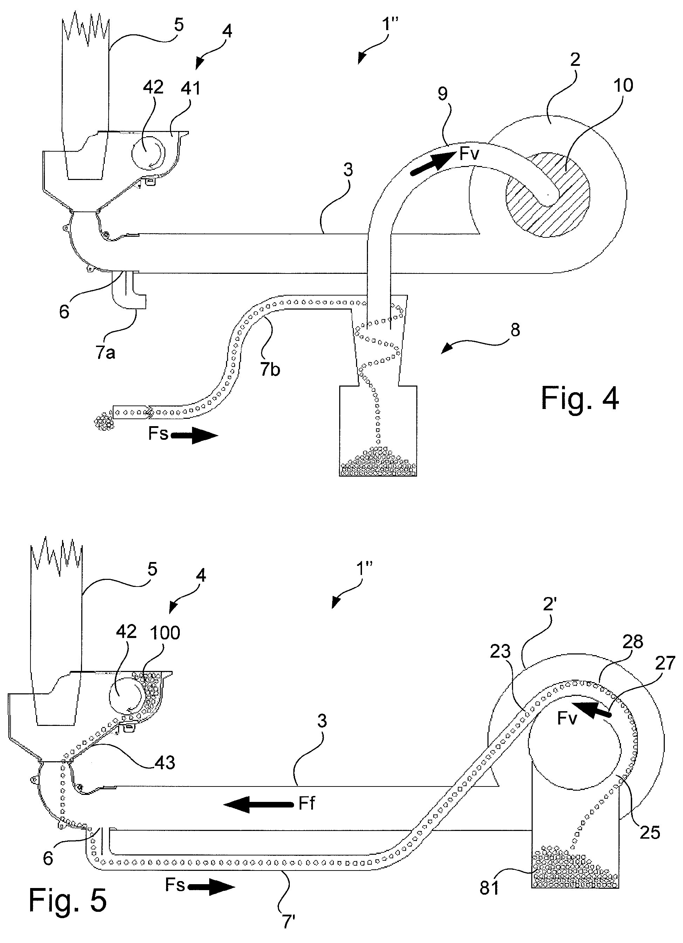

Fig. 4 shows an alternative embodiment of the dispensing system 1" , in which the separator duct 7 is dividable, so that a coupling section 7a is fixed relative to the air duct 3 and a flexible section 7b is fixed relative to the separator but detachable relative to the coupling section 7a and can thus be used as a "vacuum cleaner" for cleaning, for example, the dispensing system 1" or the seed box.

Fig. 5 shows a further alternative embodiment of the dispensing system 1"', in which the separator 8 is integrated with the blower 2, and therefore connected to the air duct 3 via a separator duct 7'.

The embodiment according to Fig. 5 can advantageously be combined with the embodiment according to Fig. 4.

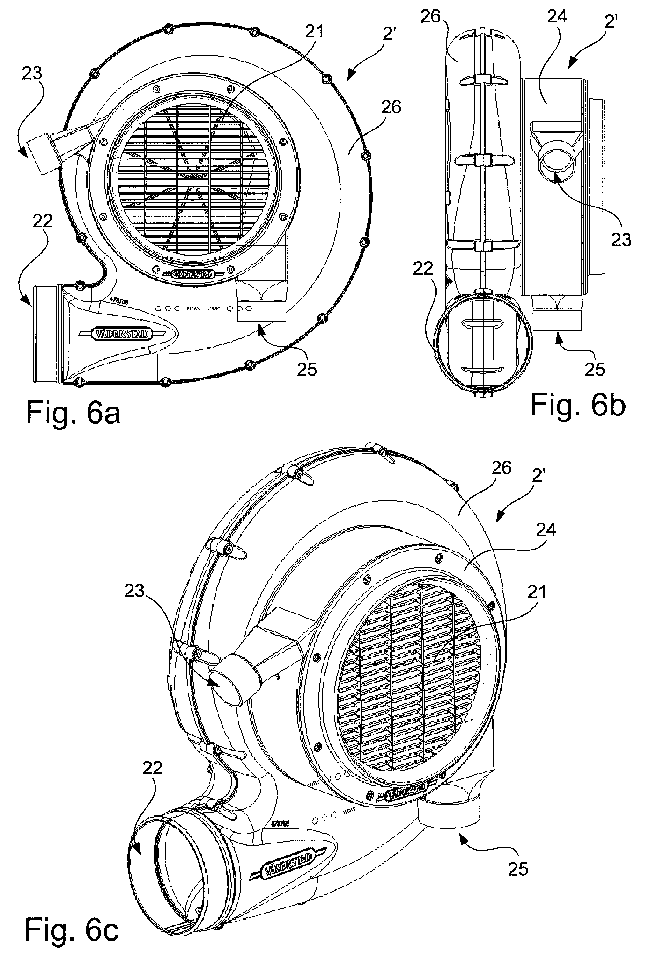

Figs. 6a-6c show an integrated blower and separator unit 2', which can be used in the dispensing system 1"' according to Fig. 5.

In Fig. 6a is shown the unit 2', viewed from the side. Fig. 6b shows the unit 2' viewed directly from the rear, as it is normally placed on a seed drill (as is shown in Fig. 2). Fig. 6 shows the unit 2' viewed obliquely from the rear.

The unit 2' comprises a blower housing 26, and a separator housing 24 integrated with the blower housing 26. The blower housing accommodates a centrifugal blower (not shown) and has an air inlet 21 and an air outlet 22. The separator housing 24 has a suction opening 23, and an outlet 25 for separated material.

Between the separator housing 24 and the blower housing 26 is found an air connection 27. In order to activate the separator, the air inlet 21 of the unit can be closed, for example by at least one plate or other closure part being placed in a seal-tight arrangement for the opening 21. The closure part can be a separate part, or a part (or a plurality of parts) which is movably coupled with the separator housing and/or the blower housing.

Underpressure is applied to the separator housing 24 through the air connection 27, which can be situated radially inside a deflection wall 28 along which the air stream Fs is conducted from the suction opening 23. Due to the mass and kinetic energy of the seed, this continues along the deflection wall 28 towards the outlet 25, whilst the air instead travels via the air connection 27 and onward to the blower.

In the shown embodiment, the deflection wall is curved in a substantially vertical plane. The deflection wall 28 can have a substantially circular curvature and run around a part of the air inlet 21 of the blower. The important thing is that the deflection wall 28 is directed and arranged relative to the air connection such that seed can be conducted along this, at the same time as air, but not seed, is drawn out through the air connection.

It will be appreciated that the blower housing 26 and the separator housing 24 can be configured in one piece, or as two separate parts which can be coupled together. For example, the separator housing can be configured so as to be able to be retrofitted onto existing blower housings.

The separator duct can be connected to the seed feeder 4 either upstream of this or downstream of this. In the first case, the separator duct can be connected to the air duct 3. In the second case, the separator duct can be connected to the outlet duct 5. In both cases, the connection can be realized with the aid of a valve 6, which is in the closed position during normal use of the drill, for example sowing, and in the open position during calibration.

By connecting the separator 8 to the air duct 3 or the outlet duct 5 via a separator duct 7, 7a, it is possible to position the separator in such a way that it becomes accessible to the operator without he or she having to climb up onto, or creep under, the drill.

With reference to Fig. 7, the implement which bears the device, and/or to which the method is applied, can be a seed drill 200, a planter, a fertilizer spreader or a pesticide spreader. The seed drill 200 can be arranged to be pulled behind a towing vehicle, such as a tractor 300.

The implement can have at least one device according to that which has been described above. For example, the drill can have a plurality of parallel-working devices for sowing, or one (or more) device(s) for sowing, a device for fertilizer and/or a device for pesticide.

According to one alternative, a separate drive unit can be arranged to produce the calibration air flow Fs. This drive unit can be constituted, for example, by a blower which has lower capacity than the blower 2, 2'. A separate drive unit of this kind can be fixedly arranged on the agricultural implement. Alternatively, the drive unit can be detachable or totally separate from the agricultural implement.

According to one alternative, the agricultural implement can be provided with two or more drive units, which can work individually to provide the respective seed feeder with feed air flow. According to a further alternative, the agricultural implement can be provided with a drive unit, which provides two or more seed feeders with feed air flow.

Based on an agricultural implement, which, viewed from above, has a periphery, a collector 81 connected to the separator can be arranged less than 1 metre from the said periphery, preferably less than 0.75 m, less than 0.5 m or less than 0.25 m. The distance between the periphery and the outermost portion of the collector can therefore be relatively small, which makes the collector easily accessible. It will be appreciated that the collector can be arranged wholly or partially inside or outside the periphery of the agricultural implement. In the latter case, the distance to the periphery is calculated from the inner portion of the separator.

It will be appreciated that the separator 8 can be integrated with the collector 81, or connected to the collector via a tube, so that material which has been separated by the separator falls via the tube to the collector under the influence of gravity. Such an arrangement can be particularly advantageous if the separator has been placed high up on the agricultural implement, or if the separator has been integrated with the drive unit 2'.

A lower portion of the collector 81 can be placed at a height of 0.5-2 m, preferably 0.8-1.3 m.

## Claims

1. Method for calibrating the feed rate of a device (1', 1") for air flow-borne dispensing of granular or powdery material (100), such as seed, fertilizer or pesticide, comprising:
producing a calibration air flow (Fs),
feeding a quantity of the granular material (100) with the aid of the calibration air flow (Fs) for a calibration period to a separator (8) and,
in the separator (8), substantially separating the granular material (100) from the calibration air flow (Fs).
**characterized in that**
the calibration air flow (Fs) is produced with the aid of underpressure applied to a low-pressure side of the separator (8).

2. Method according to Claim 1, wherein an outgoing air flow from the separator (8) can be substantially recycled to a feed air flow (Ff).

3. Method according to Claim 2, wherein the outgoing air flow from the separator (8) is supplied to a low-pressure side of a drive unit (2) which produces the feed air flow (Ff).

4. Method according to Claim 2 or 3, wherein the feed air flow (Ff) is drawn for the most part, preferably substantially only, from the calibration air flow (Fs).

5. Method according to Claim 1, wherein the calibration air flow (Fs) is produced by a first drive unit, which is separate from a second drive unit which is arranged to produce a feed air flow (Ff).

6. Method according to any one of the preceding claims, wherein the granular material (100) is separated from the calibration air flow (Fs) with the aid of a cyclone separator (8).

7. Device for air flow-borne dispensing of granular or powdery material, such as seed, fertilizer or pesticide, comprising:
a drive unit for producing a calibration air flow (Fs),
a distributor unit (4) for feeding granular or powdery material (100) to the calibration air flow (Fs), and
a separator (8), such as a cyclone separator, for separating the granular material (100) from the calibration air flow (Fs),
**characterized by**
an underpressure duct (9), which connects a low-pressure side of the separator (8) to a low-pressure side of the drive unit.

8. Device according to Claim 7, wherein the drive unit is separate from a feed drive unit, which is arranged to produce a feed air flow (Ff).

9. Device according to Claim 7, further comprising an overpressure connection between the overpressure side of the drive unit (2) and the distributor unit, wherein the drive unit (2) is arranged to produce a feed air flow (Ff).

10. Device according to Claim 9, wherein the underpressure duct (9) is detachable relative to the drive unit (2), so that the drive unit can be supplied substantially only with ambient air.

11. Device according to any one of Claims 7-10, wherein a calibration duct (7) is arranged for feeding of the granular material (100) between the distributor unit (4) and the separator (8).

12. Device according to Claim 11, wherein the calibration duct (7) is connected to the distributor unit (4) via a valve (6).

13. Device according to any one of Claims 7-12, wherein the calibration duct (7) is detachable relative to the distributor unit (4), so that an underpressure present in the separator (8) is made available for intake of material to the separator (8).

14. Device according to any one of Claims 7-13, wherein the separator (8) is substantially integrated with the drive unit (2).

15. Agricultural implement (200), for spreading granular or powdery material, such as seed, fertilizer or pesticide, comprising at least one device according to any one of Claims 7-14.

## Patentansprüche

1. Verfahren zum Eichen der Zuführgeschwindigkeit einer Vorrichtung (1', 1 ") zum luftstromgetragenen Abgeben von körnigem oder pulverförmigem Material (100), wie beispielsweise Saatgut, Dünger oder Schädlingsbekämpfungsmittel, wobei das Verfahren Folgendes umfasst:
das Erzeugen eines Eichluftstroms (Fs),
das Zuführen einer Menge des körnigen Materials (100) mit Hilfe des Eichluftstroms (Fs) für einen Eichzeitraum zu einem Abscheider (8) und,
in dem Abscheider (8), im Wesentlichen das Abscheiden des körnigen Materials (100) aus dem Eichluftstrom (Fs),
**dadurch gekennzeichnet, dass**
der Eichluftstrom (Fs) mit der Hilfe eines an eine Niederdruckseite des Abscheiders (8) angelegten Unterdrucks erzeugt wird.

2. Verfahren nach Anspruch 1, wobei ein austretender Luftstrom aus dem Abscheider (8) im Wesentlichen zu einem Zuführluftstrom (Ff) zurückgeführt werden kann.

3. Verfahren nach Anspruch 2, wobei der austretende Luftstrom aus dem Abscheider (8) einer Niederdruckseite einer Antriebseinheit (2) zugeführt wird, die den Zuführluftstrom (Ff) erzeugt.

4. Verfahren nach Anspruch 2 oder 3, wobei der Zuführluftstrom (Ff) zum größten Teil, vorzugsweise im Wesentlichen nur aus dem Eichluftstrom (Fs) abgezogen wird.

5. Verfahren nach Anspruch 1, wobei der Eichluftstrom (Fs) durch eine erste Antriebseinheit erzeugt wird, die von einer zweiten Antriebseinheit gesondert ist, die dafür angeordnet ist, einen Zuführluftstrom (Ff) zu erzeugen.

6. Verfahren nach einem der vorhergehenden Ansprüche, wobei das körnige Material (100) mit der Hilfe eines Zyklonabscheiders (8) aus dem Eichluftstrom (Fs) abgeschieden wird.

7. Vorrichtung zum luftstromgetragenen Abgeben von körnigem oder pulverförmigem Material, wie beispielsweise Saatgut, Dünger oder Schädlingsbekämpfungsmittel, die Folgendes umfasst:
eine Antriebseinheit zum Erzeugen eines Eichluftstroms (Fs),
eine Verteilereinheit (4) zum Zuführen von körnigem oder pulverförmigem Material (100) zu dem Eichluftstrom (Fs) und
einen Abscheider (8), wie beispielsweise einen Zyklonabscheider, zum Abscheiden des körnigen Materials (100) aus den Eichluftstrom (Fs),
**gekennzeichnet durch**
eine Unterdruckleitung (9), die eine Niederdruckseite des Abscheiders (8) mit einer Niederdruckseite der Antriebseinheit verbindet.

8. Vorrichtung nach Anspruch 7, wobei die Antriebseinheit von einer Zuführantriebseinheit gesondert ist, die dafür angeordnet ist, einen Zuführluftstrom (Ff) zu erzeugen.

9. Vorrichtung nach Anspruch 7, die ferner eine Überdruckleitung zwischen der Überdruckseite der Antriebseinheit (2) und der Verteilereinheit umfasst, wobei die Antriebseinheit (2) dafür angeordnet ist, einen Zuführluftstrom (Ff) zu erzeugen.

10. Vorrichtung nach Anspruch 9, wobei die Unterdruckleitung (9) im Verhältnis zu der Antriebseinheit (2) abtrennbar ist, so dass die Antriebseinheit im Wesentlichen nur mit Umgebungsluft versorgt werden kann.

11. Vorrichtung nach einem der Ansprüche 7 bis 10, wobei eine Eichleitung (7) zum Zuführen des körnigen Materials (100) zwischen der Verteilereinheit (4) und dem Abscheider (8) angeordnet ist.

12. Vorrichtung nach Anspruch 11, wobei die Eichleitung (7) über ein Ventil (6) mit der Verteilereinheit (4) verbunden ist.

13. Vorrichtung nach einem der Ansprüche 7 bis 12, wobei die Eichleitung (7) im Verhältnis zu der Verteilereinheit (4) abtrennbar ist, so dass ein in dem Abscheider (8) vorhandener Unterdruck zum Ansaugen von Material zu dem Abscheider (8) verfügbar gemacht wird.

14. Vorrichtung nach einem der Ansprüche 7 bis 13, wobei der Abscheider (8) im Wesentlichen mit der Antriebseinheit (2) integriert ist.

15. Landwirtschaftliches Gerät (200) zum Streuen von körnigem oder pulverförmigem Material, wie beispielsweise Saatgut, Dünger oder Schädlingsbekämpfungsmittel, das wenigstens eine Vorrichtung nach einem der Ansprüche 7 bis 14 umfasst.

## Revendications

1. Procédé d'étalonnage du taux d'alimentation d'un dispositif (1',1") de distribution par voie aérienne de matériaux granulaires ou pulvérulents (100), comme des semences, des engrais ou des pesticides, comprenant de :
produire un flux d'air d'étalonnage (Fs),
alimenter une quantité du matériau granulaire (100) à l'aide du flux d'air d'étalonnage (Fs) pendant une période de calibrage dans un séparateur (8) et
dans le séparateur (8), séparer substantiellement le matériau granulaire (100) du flux d'air d'étalonnage (Fs),
**caractérisé en ce que**
le flux d'air d'étalonnage (Fs) est produit à l'aide d'une dépression appliquée à un côté à basse pression du séparateur (8).

2. Procédé selon la revendication 1, dans lequel un flux d'air sortant du séparateur (8) peut être substantiellement recyclé en un flux d'air d'alimentation (Ff).

3. Procédé selon la revendication 2, dans lequel le flux d'air sortant du séparateur (8) est appliquée à un côté à basse pression d'une unité d'entraînement (2) qui produit le flux d'air d'alimentation (Ff).

4. Procédé selon la revendication 2 ou 3, dans lequel le flux d'air d'alimentation (Ff) est extrait pour la plus grande partie, de préférence seulement substantiellement du flux d'air d'étalonnage (Fs).

5. Procédé selon la revendication 1, dans lequel le flux d'air d'étalonnage (Fs) est produit par une première unité d'entraînement, qui est séparée d'une seconde unité d'entraînement qui est agencée afin de produire un flux d'air d'alimentation (Fs).

6. Procédé selon une quelconque des revendications précédentes, dans lequel le matériau granulaire (100) est séparé du flux d'air d'étalonnage (Fs) à l'aide d'un séparateur à cyclone (8).

7. Dispositif de distribution par voie aérienne de matériaux granulaires ou pulvérulents, comme des semences, engrais ou pesticides, comprenant :
une unité d'entraînement pour produire un flux d'air d'étalonnage (Fs),
une unité de distributeur (4) pour alimenter un matériaux granulaire ou pulvérulent (100) dans le flux d'air d'étalonnage (Fs) et
un séparateur (8), comme un séparateur à cyclone, pour séparer le matériau granulaire (100) du flux d'air d'étalonnage (Fs),
**caractérisé par**
une conduite de dépression (9), qui raccorde un côté à basse pression du séparateur (8) à un côté à basse pression de l'unité d'entraînement.

8. Dispositif selon la revendication 7, dans lequel l'unité d'entraînement est séparé d'une unité d'entraînement d'alimentation, qui est agencée pour produire un flux d'air d'alimentation (Ff).

9. Dispositif selon la revendication 7, comprenant en outre un raccord à surpression entre le côté à haute pression de l'unité d'entraînement (2) et l'unité de distributeur, dans lequel l'unité d'entraînement (2) est agencée pour produire un flux d'air d'alimentation (Ff).

10. Dispositif selon la revendication 9, dans lequel la conduite de dépression (9) est détachable par rapport à l'unité d'entraînement (2), de sorte que l'unité d'entraînement puisse être alimentée substantiellement avec seulement l'air ambiant.

11. Dispositif selon une quelconque des revendications 7-10, dans lequel une conduite d'étalonnage (7) est agencée pour alimenter le matériau granulaire (100) entre l'unité de distributeur (4) et le séparateur (8).

12. Dispositif selon la revendication 11, dans lequel la conduite d'étalonnage (7) est raccordée à l'unité de distributeur (4) via une soupape (6).

13. Dispositif selon une quelconque des revendications 7-12, dans lequel la conduite d'étalonnage (7) est détachable par rapport à l'unité de distributeur (4), de sorte qu'une dépression présente dans le séparateur (8) soit rendue disponible pour l'admission de matériaux dans le séparateur (8).

14. Dispositif selon une quelconque des revendications 7-13, dans lequel le séparateur (8) est substantiellement intégré à l'unité d'entraînement (2).

15. Machine agricole (200), pour étaler les matériaux granulaires ou pulvérulents, comme des semences, engrais ou pesticides, comprenant au moins un dispositif selon une quelconque des revendications 7-14.
